# EUROPEAN PATENT SPECIFICATION

(11) **EP 1 018 454 B1**
(45) Date of publication and mention of the grant of the patent: **13.11.2002**
(21) Application number: 99500233.4
(22) Date of filing: 07.12.1999
(51) Int. Cl.: B60R 1/06

(54) **Fold-down mechanism for external rear-view automobile mirrors**
Klappmechanismus für Kraftfahrzeug-Aussenspiegel
Mécanisme pour rétroviseur extérieur rabattable pour un véhicule automobile

(30) Priority: 21.12.1998 ES 9802652
(43) Date of publication of application: 12.07.2000
(73) Proprietor: Fico Mirrors, S.A., 08028 Barcelona (ES)
(72) Inventor: Tort del Molino, Ignasi, 08017 Barcelona (ES); Bande Martinez, Daniel, 08800 Vilanova I la Geltru (ES); Person Millarvelo, Carles, 08014 Barcelona (ES)
(74) Representative: SUGRANES - VERDONCES - FERREGÜELA

(56) References cited:
- EP-A- 0 686 524
- WO-A-91/04172
- FR-A- 2 652 318

## Description

### Technical sector of the invention.-

The object of the invention is a fold-down mechanism for external rear-view automobile mirrors used in external rear-view mirrors where the position of the mirror-holding casing with respect to the vehicle body can be varied manually or automatically between two positions: a first, backward, folded-down, or parked position in which the casing is superimposed on the vehicle body; and a second forward, unfolded position provided through hypothetical, mechanical impact on the said casing, there being defined between the two said end positions a casing position corresponding to the driving position of the vehicle.

### Background of the invention.-

Multiple embodiments of fold-down mechanisms for external rear-view automobile mirrors are known of a type consisting of the following structural elements: a support-chassis fixed to the vehicle structure; a casing-chassis to which is coupled a mirror-holding casing, the casing-chassis having a specular surface generally provided with a positioning mechanism for the said surface, regardless of the position occupied by the casing-chassis; and a fixing device that links the casing-chassis to the support-chassis.

Fold-down mechanisms for external rear-view automobile mirrors such as those previously described are coupled to the casing-chassis and in general comprise an electric motor, a speed reducer and means of coupling with the support-chassis.

As an example of embodiment of such a mechanism according to the preamble of claim 1 it is worth citing WO 91/04172. In the said document, a mechanism is disclosed in which the output axis of the speed reducer is coaxial to the electric drive shaft and the reducer consists of a planetary transmission.

In general, those known embodiments of fold-down mechanisms for external rear-view mirrors have as principal drawbacks that they consist of a high number of components thereby raising production and assembly costs greatly and that they generate a high noise level while functioning.

### Explanation of the invention.-

With the aim of contributing a new embodiment of the fold-down mechanism that provides a solution to the previously mentioned drawbacks, an fold-down mechanism for external rear-view automobile mirrors of a new structure is disclosed here.

The automatic fold-down mechanism, object of the present invention, is applicable to rear-view mirrors of the type that comprise a support-chassis provided with a means of fixing to the vehicle structure, a casing-chassis able to be coupled to the support-chassis and adapted to receive a specular surface provided with a positioning mechanism and a fixing device for coupling the casing-chassis to the support-chassis, the fold-down mechanism comprising an electric motor, a speed reducer and a pair of sprockets of the worm-helical wheel type, the said motor, reducer and pair of sprockets being positioned in a removable housing that can be coupled to the casing chassis.

The fold-down mechanism, object of the invention, is cha-racterized in that the speed reducer comprises two shafts: a first shaft to which the motor drive shaft and the worm shaft are axially coupled, and a second shaft parallel to the first, four pairs of cylindrical sprockets being positioned successively along the said two shafts:
- a first pair of helical-toothed sprockets, wherein its drive wheel is a pinion coupled to the motor drive shaft and its driven wheel is positioned on the second shaft;
- a second pair of straight-toothed sprockets, wherein its drive wheel is a pinion integral with the driven wheel of the first pair and its driven wheel is positioned on the first shaft;
- a third pair of straight-toothed sprockets, wherein its drive wheel is a pinion integral with the driven wheel of the second pair and its driven wheel is positioned on the second shaft; and
- a fourth pair of straight-toothed sprockets, wherein its drive wheel is a pinion integral with the driven wheel of the third pair and the driven wheel is integral with the worm, this entire assembly adapted in such a manner that the reduction ratio between the rotation speed of the pinion of the first pair and the rotation speed of the driven wheel of the fourth pair is between 26.3 and 54.7.

According to another feature of the mechanism of the invention, the speed reduction ratio between the first pair of sprockets is between 3.2 and 3.6, the ratio of the second pair between 2.8 and 3.2, the ratio of the third pair between 2 and 2.5, and the ratio of the fourth pair between 1.4 and 1.9.

According to a further feature of the mechanism of the invention, the pinion of the first pair of sprockets and the pinion of the fourth pair of sprockets are made from a yellow metal material.

According to a still another feature of the mechanism of the invention, the driven wheel of the first pair of sprockets, and the second and third pairs of sprockets, and the driven wheel of the fourth pair of sprockets, are made from an injected plastic material.

The features of the fold-down mechanism, object of the invention, provide, with respect to known embodiments of fold-down mechanisms, the following advantages:
- The speed reducer consists of a reduced number of components, achieving, with respect to known embodiments of speed reducers, a marked reduction in manufacturing and assembly costs; and
- The structure of the speed reducer, as well as the speed reduction ratio achieved by each pair of reducer sprockets, the tooth type adopted by each pair of sprockets (helical in the first pair and straight in the other three pairs of sprockets) and the constituent material of the reducer (yellow metal in the pinions of the first and fourth pair of sprockets and plastic material in the remaining reducer sprockets) enable the sound level while the speed reducer is working to be significantly lower with respect to the sound level achieved in known embodiments of speed reducers, namely, in trials carried out by the inventor, the sound level reached during working of the speed reducer according to the invention is in the range of 30dB, while, in identical working conditions, the average sound level reached by known embodiments of speed reducers is in the range of 45 dB, i.e., that using the speed reducer according to the invention a sound level reduction is achieved in the range of 15 dB.

### Brief description of the drawings.-

The sheets of drawings in the present description represent the fold-down mechanism for external rear-view automobile mirrors, object of the invention. In the said drawings:
Figure 1 is a perspective view of an external rear-view mirror consisting of a support-chassis, a casing-chassis, and the fold-down mechanism according to the invention in a position previous to its coupling,
Figure 2 is a perspective view of the components of the fold-down mechanism according to the invention previous to their mutual coupling, and
Figure 3 is a perspective view of the fold-down mechanism according to the invention.

### Detailed description of the example of embodiment.-

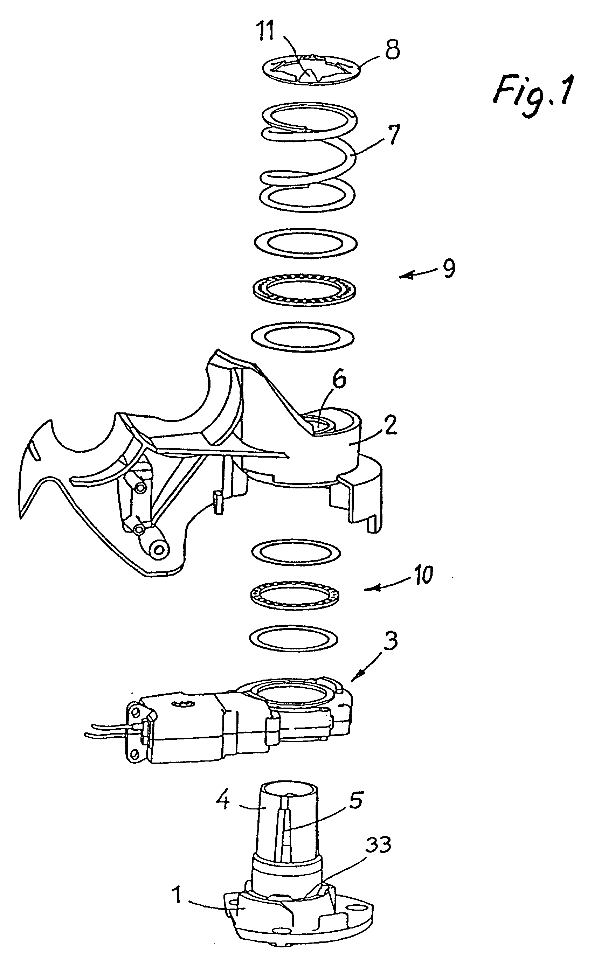

Figure 1 shows in perspective and partial view an external rear-view automobile mirror, specifically that responding to the driver's side. The rear-view mirror consists of: a support-chassis 1 adapted for anchoring to the vehicle structure; a casing-chassis 2 partially shown and adapted to receive a specular surface provided with a positioning mechanism, neither element being represented; and a fold-down mechanism 3 positioned between the support-chassis 1 and the casing-chassis 2. Furthermore, the casing-chassis 2 is adapted to allow the coupling of a mirror-holding casing that is not represented.

The support-chassis 1 and the casing-chassis 2 are able to be coupled together by means of a fixing device that comprises: in the support-chassis 1, a conical extension 4 in which a plurality of axial grooves 5 are provided; in the casing-chassis 2, a through-hole 6; a spring 7; a fixing washer 8; a first bearing 9; and a second bearing 10. These elements are adapted in such a manner that: the fold-down mechanism 3 receiving the conical extension 4 is positioned on the support-chassis 1 supporting a surface 32, the conical extension 4 of the support-chassis 1 pierces the through hole 6 of the casing-chassis 2, projecting from the same, the second bearing 10 being placed between the fold-down mechanism 3 and the casing-chassis 2, the fixing washer 8, that is provided with fixing bosses 11, is coupled to the conical extension 4 of the support-chassis 1 with the bosses 11 being introduced in the grooves 5, the spring 7 and the first bearing 9 being positioned between the washer 8 and the casing-chassis 2. Through this construction of the rear-view mirror, the casing-chassis 2 can, via the fold-down mechanism 3, revolve around the support-chassis 1 between the first, backward, folded-down, or parked position, and a second, forward, folded-up position provided through hypothetical, mechanical impact.

What is previously described is already known and widely used in external rear-view automobile mirrors. It is understood that the support chassis 1 and the casing-chassis 2 depicted in Figure 1 are provided merely as an illustrative example, since they can adopt any configuration appropriate to each concrete application case.

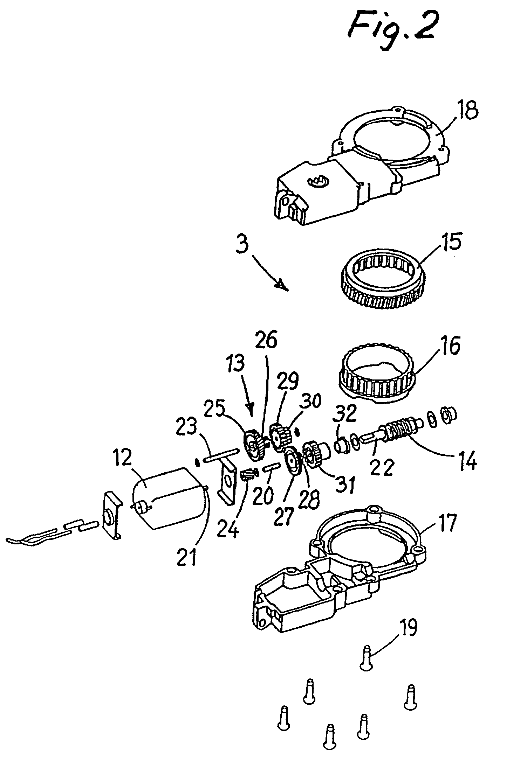

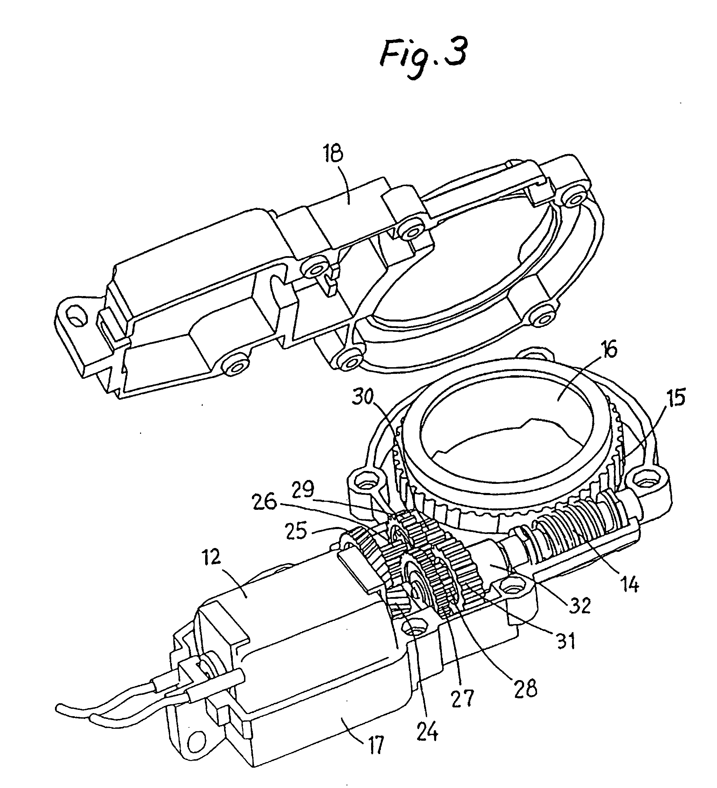

Figure 2 shows that the fold-down mechanism 3 comprises: a DC electric motor 12, fed through the vehicle electrical system; a speed reducer 13; a pair of worm type sprockets 14; a helical sprocket 15, that is provided with an internal coaxial adapter 16; and a removable housing composed of two halves 17, 18 able to be coupled together using screws 19, the housing being adapted in such a manner that, as shown in figure 3, it houses the totality of components described, i.e., the electric motor 12, the reducer 13 and the worm-helical wheel pair 14, 15.

In the following description reference is indistinctly made to Figures 2 and 3.

The speed reducer 13 comprises two shafts: a first shaft 20 to which the electric motor 12 drive shaft 21 and the worm 14 shaft 22 are axially coupled, and a second shaft 23 parallel to the first.

On the first and second shafts 20, 23 four cylindrical pairs of sprockets are successively positioned.

A first pair of helical-toothed sprockets in which its drive wheel is a pinion 24 coupled to the drive shaft 21 of the electric motor 12 while its driven wheel 25 is positioned on the second shaft 23; preferably, the reduction ratio of this first pair is comprised between 3.2 and 3.6.

A second pair of straight-toothed sprockets in which its drive wheel is a pinion 26 integral with the driven wheel 25 of the first pair, while its driven wheel 27 is positioned on the first shaft 20; preferably, the reduction ratio of this second pair is comprised between 2.8 and 3.2.

A third pair of straight-toothed sprockets in which its drive wheel is a pinion 28 integral with the driven wheel 27 of the second pair, while its driven wheel 29 is positioned on the second shaft 23; preferably, the reduction ratio of this third pair is comprised between 2.1 and 2.5.

A fourth pair of straight-toothed sprockets in which its drive wheel is a pinion 30 integral with the driven wheel 29 of the third pair, while its driven wheel 31 is coupled, via a coupling 32 to the shaft 22 of the worm 14; preferably, the reduction ratio of this fourth pair is comprised between 1.4 and 1.9.

The four pairs of sprockets previously described enable the obtention of a speed reduction ratio, between the speed of the pinion 24 of the first pair or the drive shaft 21 of the electric motor 12 and that of the driven wheel 31 of the fourth pair or of the worm 14, preferably situated between 26.3 and 54.7.

The pinion 24 of the first pair and the pinion 30 of the fourth pair are preferably made from a yellow metal material. On the other hand, the driven wheel 25 of the first pair, the pinion 26 and the driven wheel 27 of the second pair, and the pinion 28 and the driven wheel 29 of the third pair are preferably made from a plastic material. With this material arrangement, the sound level reached during working of the fold-down mechanism according to the invention, is significantly lower with respect to the sound level achieved in known embodiments of fold-down mechanisms, and in the measure previously specified.

## Claims

1. Fold-down mechanism for external rear-view automobile mirrors of the type that comprise
- a support-chassis (1) provided with a means of fixing to the vehicle structure;
- a casing-chassis (2) able to be coupled to the support-chassis (1) and adapted to receive a specular surface provided with a positioning mechanism; and
- a fixing device for coupling the casing-chassis (2) to the support-chassis (1), the fold-down mechanism comprising:
- an electric motor (12) fed through the vehicle electrical system;
- a speed reducer (13); and
- a pair of sprockets of the worm (14) and helical wheel (15),
the said motor (12), reducer (13) and pair of sprockets (14, 15) being positioned in a removable housing (17, 18) that can be coupled to the casing chassis (2), **characterised in that** the speed reducer (13) comprises two shafts: a first shaft (20) to which the motor (12) drive shaft (21) and the worm shaft (22) are axially coupled, and a second shaft (23) parallel to the first (20), four cylindrical pairs of sprockets being positioned successively along the said two shafts (20, 21):
- a first pair of helical-toothed sprockets, wherein its drive wheel is a pinion (24) coupled to the drive shaft (21) of the motor and its driven wheel (25) is positioned on the second shaft (23);
- a second pair of straight-toothed sprockets, wherein its drive wheel is a pinion (26) integral with the driven wheel (25) of the first pair and its driven wheel (27) is positioned on the first shaft (20);
- a third pair of straight-toothed sprockets, wherein its drive wheel is a pinion (28) integral with the driven wheel (27) of the second pair and its driven wheel (29) is positioned on the second shaft (23); and
- a fourth pair of straight-toothed sprockets, wherein its drive wheel is a pinion (30) integral with the driven wheel (29) of the third pair and its driven wheel (31) is integral with the worm (14), this entire assembly adapted in such a manner that the reduction ratio between the rotation speed of the pinion (24) of the first pair and the rotation speed of the driven wheel (31) of the fourth pair is between 26.3 and 54.7.

2. Fold-down mechanism according to claim 1, **characterised in that** the speed reduction ratio between the first pair of sprockets is between 3.2 and 3.6, the ratio of the second pair between 2.8 and 3.2, the ratio of the third pair between 2.1 and 2.5, and the ratio of the fourth pair between 1.4 and 1.9.

## Patentansprüche

1. Herabklappmechanismus für Kraftfahrzeug-Außenrückspiegel des Typs, der aufweist
- ein Stützgehäuse (1), das mit einer Befestigungseinrichtung an dem Fahrzeugaufbau versehen ist;
- ein Verkleidungsgehäuse (2), das an das Stützgehäuse (1) gekoppelt werden kann und das angepasst ist, um eine spiegelnde Fläche aufzunehmen, die mit einem Positioniermechanismus versehen ist; und
- eine Befestigungsvorrichtung zum Koppeln des Verkleidungsgehäuses (2) an das Stützgehäuse (1), wobei der Herabklappmechanismus aufweist:
- einen Elektromotor (12), der durch die elektrische Anlage des Fahrzeuges gespeist wird;
- ein Reduktionsgetriebe (13), und
- ein Paar von Zahnkränzen der Schnecke (14) und ein Spiralrad (15),
- der Motor (12), das Reduktionsstück (13) und das Paar von Zahnkränzen (14, 15), sind in einem abnehmbaren Gehäuse (17, 18) positioniert, das an das Verkleidungsgehäuse (2) gekoppelt werden kann, **dadurch gekennzeichnet, dass** das Reduktionsgetriebe (13) zwei Wellen aufweist: eine erste Welle (20), mit der die Motor-(12) Antriebswelle (21) und die Schneckenwelle (22) axial gekoppelt sind, und eine zweite Welle (23), die parallel zu der ersten (20) ist, wobei vier zylindrische Paare von Zahnkränzen nacheinander entlang der zwei Wellen (20, 21) positioniert sind:
- ein erstes Paar von spiralverzahnten Zahnkränzen, wobei ihr Antriebsrad ein Ritzel (24) ist, das mit der Antriebswelle (21) des Motors gekoppelt ist und ihr getriebenes Rad (25) an der zweiten Welle (23) positioniert ist;
- ein zweites Paar von gerade verzahnten Zahnkränzen, wobei ihr Antriebsrad ein Ritzel (26), das einstückig mit dem getriebenen Rad (25) des ersten Paares ist und ihr getriebenes Rad (27) an der ersten Welle (20) positioniert ist;
- ein drittes Paar von gerade verzahnten Zahnkränzen, wobei ihr Antriebsrad ein Ritzel (28) ist, das einstückig mit dem getriebenen Rad (27) des zweiten Paares ist und ihr getriebenes Rad (29) an der zweiten Welle (23) positioniert ist; und
- ein viertes Paar von gerade verzahnten Zahnkränzen, wobei ihr Antriebsrad ein Ritzel (30) ist, das einstückig mit dem getriebenen Rad (29) des dritten Paares ist und ihr getriebenes Rad (31) einstückig mit der Schnecke (14) ist, wobei diese gesamte Baugruppe in einer derartigen Weise angepasst ist, dass das Reduktionsverhältnis zwischen der Rotationsgeschwindigkeit des Ritzels (24) des ersten Paares und die Rotationsgeschwindigkeit des getriebenen Rades (31) des vierten Paares zwischen 26,3 und 54,7 ist.

2. Herabklappmechanismus nach Anspruch 1, **dadurch gekennzeichnet, dass** das Geschwindigkeitsreduktionsverhältnis zwischen dem ersten Paar von Zahnkrärizen zwischen 3,2 und 3,6, das Verhältnis des zweiten Paares zwischen 2,8 und 3,2, das Verhältnis des dritten Paares zwischen 2,1 und 2,5, und das Verhältnis des vierten Paares zwischen 1,4 und 1,9 ist.

## Revendications

1. Mécanisme rabattable pour rétroviseurs automobiles extérieurs du type comprenant
- un châssis support (1) muni d'un moyen de fixation à la structure de véhicule ;
- un châssis corps (2) pouvant être couplé au châssis support (1) et conçu pour recevoir une surface spéculaire munie d'un mécanisme de positionnement ; et
- un dispositif de fixation destiné à coupler le châssis corps (2) au châssis support (1), le mécanisme rabattable comprenant :
- un moteur électrique (12) alimenté par l'intermédiaire du système électrique du véhicule ;
- un réducteur de vitesse (13) ; et
- une paire de pignons constituée de la vis sans fin (14) et d'une roue hélicoïdale (15),
lesdits moteur (12), réducteur (13) et paire de pignons (14, 15) étant positionnés dans un boîtier amovible (17, 18) pouvant être couplé au châssis corps (2), **caractérisé en ce que** le réducteur de vitesse (13) comprend deux arbres : un premier arbre (20) auquel l'arbre d'entraînement (21) du moteur (12) et l'arbre de vis sans fin (22) sont accouplés axialement, et un deuxième arbre (23) parallèle au premier (20), quatre paires cylindriques de pignons étant positionnées successivement le long desdits deux arbres (20, 21) :
- une première paire de pignons à denture hélicoïdale, dans laquelle la roue menante est un pignon (24) couplé à l'arbre d'entraînement (21) du moteur et la roue menée (25) est positionnée sur le deuxième arbre (23) ;
- une deuxième paire de pignons à denture droite, dans laquelle la roue menante est un pignon (26) d'un seul tenant avec la roue menée (25) de la première paire et la roue menée (27) est positionnée sur le premier arbre (20) ;
- une troisième paire de pignons à denture droite, dans laquelle la roue menante est un pignon (28) d'un seul tenant avec la roue menée (27) de la deuxième paire et la roue menée (29) est positionnée sur le deuxième arbre (23) ; et
- une quatrième paire de pignons à denture droite, dans laquelle la roue menante est un pignon (30) d'un seul tenant avec la roue menée (29) de la troisième paire et la roue menée (31) est d'un seul tenant avec la vis sans fin (14), tout cet ensemble étant conçu de façon que le rapport de réduction entre la vitesse de rotation du pignon (24) de la première paire et la vitesse de rotation de la roue menée (31) de la quatrième paire soit compris entre 26,3 et 54,7.

2. Mécanisme rabattable selon la revendication 1, **caractérisé en ce que** le rapport de réduction de vitesse entre la première paire de pignons est compris entre 3,2 et 3,6, le rapport de la deuxième paire est compris entre 2,8 et 3,2, le rapport de la troisième paire est compris entre 2,1 et 2,5 et le rapport de la quatrième paire est compris entre 1,4 et 1,9.
